# EUROPÄISCHE PATENTSCHRIFT

(11) **EP 4 356 074 B1**
(45) Veröffentlichungstag und Bekanntmachung des Hinweises auf die Patenterteilung: **26.03.2025**
(21) Anmeldenummer: 21777960.2
(22) Anmeldetag: 09.09.2021
(51) Int. Cl.: G01D 5/241

(54) **KAPAZITIVE ABLESEVORRICHTUNG FÜR EIN ZEIGERINSTRUMENT**
CAPACITIVE READING DEVICE FOR A POINTER INSTRUMENT
DISPOSITIF DE LECTURE CAPACITIVE POUR UN INSTRUMENT À AIGUILLE

(43) Veröffentlichungstag der Anmeldung: 24.04.2024
(73) Patentinhaber: Siemens Aktiengesellschaft, 80333 München (DE)
(72) Erfinder: KLEHR, Stefan, 76764 Rheinzabern (DE)
(74) Vertreter: Siemens Patent Attorneys
(86) Internationale Anmeldenummer: PCT/EP2021/074812
(87) Internationale Veröffentlichungsnummer: WO 2023/036423

(56) Entgegenhaltungen:
- US-A- 4 743 838
- US-A- 4 999 734
- US-A1- 2018 328 762

## Beschreibung

Die Erfindung betrifft eine kapazitive Ablesevorrichtung für ein Zeigerinstrument.

Im Feld bereits installierte Zeigerinstrumente, wie z. B. Manometer oder Thermometer usw., werden in der Regel vor Ort von einer Person abgelesen. Es besteht das Bedürfnis, diese Zeigerinstrumente aus der Ferne abzulesen, ohne dass eine Person sich vor Ort begeben muss. Zudem soll das Ablesen der mit der Zeigerstellung angezeigten Messgröße automatisch erfolgen und als Messwert in digitaler Form zur Verfügung gestellt werden.

Oft befindet sich vor Ort keine elektrische Energieversorgung und keine Datenleitung. Eine technische Vorrichtung, die die Zeigerstellung automatisch abliest, soll daher möglichst wenig Energie verbrauchen und in der Lage sein, den Messwert drahtlos zu übertragen. Zudem darf diese technische Vorrichtung nur wenig kosten, damit sich eine derartige Nachrüstung für den Betreiber lohnt.

Optische Ablesevorrichtungen, wie sie beispielsweise aus der WO 2007/147609 A2, US 6,157,311 A oder US 4,275,393 A bekannt sind, gegenüber Störungen durch Fremdlicht empfindlich und benötigen daher ggf. eine aktive Beleuchtung.

Aus der EP 3 150 972 B1 und der DE 38 91 367 C2 bekannte kapazitiven Ablesevorrichtungen weisen eine Mehrzahl von Elektroden auf, die gegenüber dem drehenden Zeiger des Zeigerinstruments auf einem Träger in einem Kreis oder Kreisbogen angeordnet sind. Die Messauflösung ist unmittelbar von der Anzahl der Elektroden abhängig und dadurch beschränkt, dass über gebräuchliche Multiplexer nur eine kleine Anzahl von, z. B., 8 oder 16 Elektroden mit der Messelektronik verbunden werden können. Große Multiplexer oder Lösungen mit kaskadierten Multiplexern sind aufwendig und teuer.

Die Patentschrift US 4,999,734 A offenbart eine Vorrichtung zum Ablesen eines Messgeräts mit einem Zeiger, das eine Mehrzahl an Elektroden aufweist. Wenn ein Metallabschnitt am Zeiger eine Elektrode überstreicht, wird eine Kapazitätsänderung herbeigeführt, die erfassbar ist, so dass die Zeigerposition erfassbar ist.

Aus der Druckschrift US 4,743,838 A ist ein Multiplexer bekannt, der zu einer kapazitativen Anzeigevorrichtung gehört. Zur kapazitativen Anzeigevorrichtung gehören Elektroden, die durch einen isolierenden Abschnitt sinuswellenförmig geteilt sind. Den Elektroden sind gegenüberliegend Empfangselektroden angebracht, die gegenüber den Elektroden verschiebbar sind. Der Multiplexer ist dazu eingerichtet, aus den resultierenden Kapazitätsänderungen die Verschiebung zu erfassen.

Die Patenanmeldung US 2018/328762 A1 zeigt einen kapazitativen Dreh-Encoder, der ein kapazitatives Sensor-Array umfasst. Das kapazitative Sensor-Array umfasst eine Mehrzahl an Einzelsensoren, die in mehreren konzentrischen Ringen auf einer PCB-Scheibe angeordnet sind. Mehrere Einzelsensoren, also Einzelkapazitäten, sind radial ausgerichtet und dazu eingerichtet, in Radialrichtung ein Datenwort mit mehreren Bit zu bilden.

Der Erfindung liegt die Aufgabe zugrunde, eine kontinuierlich-analoge Zeigerstellung mit einfachen Mitteln und guter Messauflösung zu erfassen.

Gemäß der Erfindung wird die Aufgabe durch die in Anspruch 1 definierte kapazitive Ablesevorrichtung gelöst, von der vorteilhafte Weiterbildungen in den Unteransprüchen angegeben sind.

Gegenstand der Erfindung ist somit eine kapazitive Ablesevorrichtung für ein Zeigerinstrument mit einem zur Anordnung gegenüber einem drehenden Zeiger des Zeigerinstruments vorgesehenen Träger, auf dem in einem Kreisbogen eine Vielzahl von n radialen Elektroden im Wechsel mit radialen Gegenelektroden angeordnet sind,
wobei die Gegenelektroden elektrisch miteinander verbunden und an einem ersten Messanschluss eines Kapazität-Digital-Wandlers angeschlossen sind,
wobei die n Elektroden über eine n x k Verbindungsmatrix und einen nachgeordneten 1-aus-k Multiplexer an einem zweiten Messanschluss des Kapazität-Digital-Wandlers angeschlossen sind, und
wobei die n x k Verbindungsmatrix jede der n Elektroden mit jeweils einem der k Kanäle des 1-aus-k Multiplexers verbindet. Zu einem Ermitteln einer Position des Zeigers variiert das Verbindungsmuster entlang des Kreisbogens. Das Verbindungsmuster kann insoweit variieren, dass sich entlang des Kreisbogens betrachtet sich für die Kanäle zumindest abschnittsweise für das Verbindungsmuster eine nicht-wiederholende Reihenfolge ergibt. Durch ein Erfassen einer kapazitiven Beeinflussung einer Mehrzahl von Kanälen ist durch das nicht-wiederholende Muster die Position des Zeigers ermittelbar.

Beispielsweise kann das Verbindungsmuster entlang des Kreisbogens mit n Variationen von b aus k variieren, wobei n > k ≥ b > 1 ist.

Darüber hinaus können die n Variationen von v aus k Kanälen unter Berücksichtigung einer Reihenfolge der Kanäle gebildet sein. Durch eine Berücksichtigung der Reihenfolge ergibt sich eine Möglichkeit zur eindeutigen Ermittlung einer Position des Zeigers.

Ferner kann die beanspruchte kapazitive Ablesevorrichtung dazu ausgebildet sein, die Stärke einer kapazitiven Beeinflussung eines Kanals zu ermitteln. Infolgedessen ist unter anderem bestimmbar, welcher Kanal durch den Zeiger am stärksten kapazitiv beeinflusst wird. Ein am stärksten kapazitiv beeinflusster Kanal weist darauf hin, dass dieser dem Zeiger an nächsten ist. Ein geringer kapazitiv beeinflusster Kanal kann darauf hinweisen, dass dieser dem am stärksten kapazitiv beeinflussten Kanal benachbart ist. Ein noch geringer kapazitiv beeinflusster Kanal kann zwei Positionen neben dem am stärksten beeinflussten Kanal liegen. Dies gilt analog weiter für noch weiter entfernte Kanäle. Dadurch kann in Verbindung mit dem Verbindungsmuster die Position des Zeigers eindeutig bestimmt werden.

Die radialen Elektroden müssen nicht zwingenderweise streng geradlinig radial angeordnet bzw. ausgebildet sein; sie können auch leicht schräg radial und/oder leicht gekrümmt sein.

Der Winkelbereich des Kreisbogens, in dem die Elektroden um die Drehachse des Zeigers herum angeordnet sind, sollte zumindest dem Ausschlagbereich des Zeigers des Zeigerinstruments entsprechen. Um die optische Ablesevorrichtung weitgehend unabhängig von der Bauart des Zeigerinstruments verwenden zu können, können die Elektroden in einem geschlossenen Kreis angeordnet sein.

Mit Hilfe der n x k Verbindungsmatrix ist es möglich, auch bei einer vergleichsweise hohen Anzahl von n Elektroden jede Zeigerstellung auf einer wesentlich geringeren Anzahl von k Kanälen des 1-aus-k Multiplexers eindeutig darzustellen. Wenn man ein "Messfenster" von k nebeneinanderliegenden Elektroden annimmt, innerhalb dessen der Zeiger b Elektroden (b ≤ k) kapazitiv beeinflusst, so gibt es für den ungünstigsten Fall, dass der Zeiger diese b Elektroden gleich, d. h. nicht unterscheidbar, beeinflusst, Nₘᵢₙ = k!/[(k-b)!·b!] Kombinationen von b aus k Messwerten. Im günstigsten Fall beeinflusst der Zeiger die b Elektroden zwar rechts und links von ihm gleich, ansonsten aber in zunehmender Entfernung von ihm unterschiedlich. Dann gibt es Nₘₐₓ = k!/[2·(k-b)!] Variationen ("Kombination mit Berücksichtigung der Reihenfolge") von b aus k Messwerten. Dadurch ist es möglich, bei n Elektroden (Nₘₐₓ > n > Nₘᵢₙ) jede Zeigerstellung auf k Kanäle des 1-aus-k Multiplexers eindeutig auszugeben.

Im Weiteren wird die Erfindung anhand von Ausführungsbeispielen und unter Bezugnahme auf die Figuren der Zeichnung erläutert; im Einzelnen zeigen:
- Fig. 1: ein Ausführungsbeispiel einer kapazitiven Ablesevorrichtung an einem Zeigerinstrument,
- Fig. 2: ein Blockschaltbild der kapazitiven Ablesevorrichtung,
- Fig. 3: ein einfaches Beispiel für die Verbindung der Elektroden mit dem 1-aus-k Multiplexer über eine n x k Verbindungsmatrix und
- Fig. 4: ein Beispiel für die Ermittlung des Verbindungsmusters der n x k Verbindungsmatrix.

Gleiche Bezugszeichen haben in den verschiedenen Figuren die gleiche Bedeutung. Die Darstellungen sind rein schematisch und repräsentieren keine Größenverhältnisse.

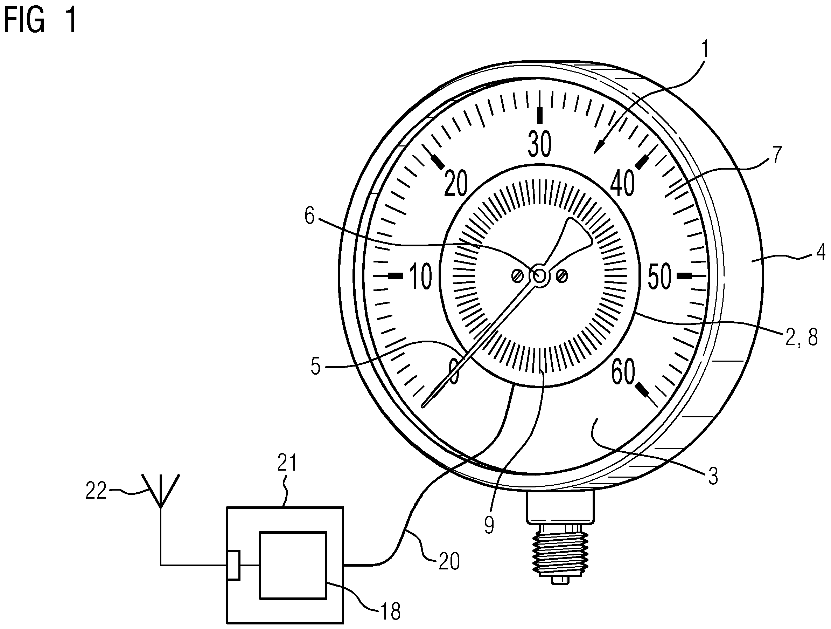

Fig. 1 zeigt beispielhaft ein Ausführungsbeispiel einer kapazitiven Ablesevorrichtung 1 mit einem flachen Pick-up-Sensor 2, der auf der Sichtscheibe 3 eines Zeigerinstruments 4, hier eines Manometers, aufgeklebt ist. Der Pick-up-Sensor 2 kann auch anderweitig an dem Zeigerinstrument 4 angebracht, beispielsweise aufgeklemmt, werden. Bei dem Zeigerinstrument 4 handelt es sich um ein übliches Rundinstrument mit einem Zeiger 5, der sich hinter der Sichtscheibe 3 um eine Achse 6 über dem Skalen- oder Ziffernblatt 7 des Zeigerinstruments 4 dreht.

Der Pick-up-Sensor 2 ist derart angeordnet und ausgebildet, dass er einerseits dem Zeiger 5 so gegenüberliegt, dass dieser den Ausschlagbereich des Zeigers 5 vollständig erfasst, und andererseits weiterhin eine Sicht auf die Skalenbeschriftung und, zumindest teilweise, den Zeiger 5 ermöglicht. Insbesondere kann der Pick-up-Sensor 2 in weiten Teilen transparent ausgebildet sein.

Der Pick-up-Sensor 2 ist als Träger 8 für eine Vielzahl von n Elektroden 9 ausgebildet, die in einem Kreisbogen um die Achse 6 des Zeigers 5 angeordnet und im Wesentlichen radial ausgerichtet sind. Der Kreisbogen mit den Elektroden 9 muss nicht notwendigerweise geschlossen sein, wenn der Ausschlagbereich des Zeigers 5 kleiner als 360°, z. B. 270°, beträgt.

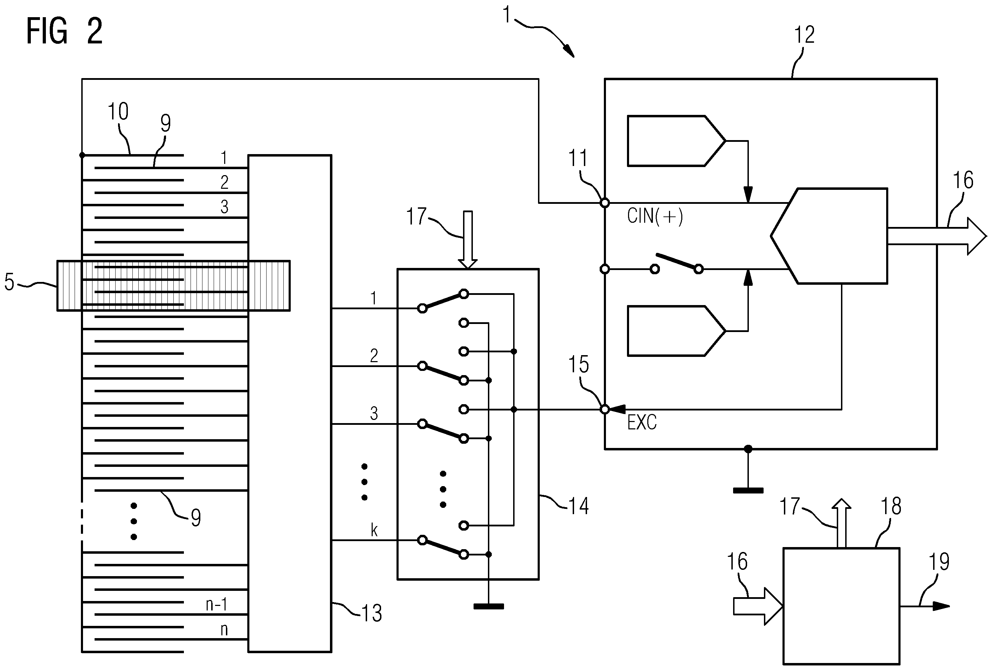

Fig. 2 zeigt ein Blockschaltbild der kapazitiven Ablesevorrichtung 1. Die radialen Elektroden 9 sind abwechselnd mit radialen Gegenelektroden 10 angeordnet, wobei die Anordnung in Fig. 2 der Einfachheit halber nicht kreisförmig, sondern geradlinig dargestellt ist. Die Gegenelektroden 10 sind elektrisch miteinander verbunden und an einem ersten Messanschluss 11 eines Kapazität-Digital-Wandlers 12 angeschlossen. Die n Elektroden 9 sind über eine n x k Verbindungsmatrix 13 und einen nachgeordneten 1-aus-k Multiplexer 14 an einem zweiten Messanschluss 15 des Kapazität-Digital-Wandlers 12 angeschlossen.

Hochauflösende Kapazität-Digital-Wandler (CDCs) sind beispielsweise von Analog Devices, Inc. unter den Bezeichnungen AD7745/AD7746 erhältlich. Dieser CDC erfasst einen Kapazitätsbereich von 0 bis 8 pF mit einer Auflösung von 24 Bit. Die Kapazität wird zwischen dem ersten Messanschluss 11 und dem zweiten Messanschluss 15 gemessen und als 24 Bit Wert 16 ausgegeben. Der zweite Messanschluss 15 steuert hierbei den Lade- und Entladezyklus der zu messenden Kapazität. Es handelt sich dabei um eine niederohmige Spannungsquelle mit einem Rechteck-Signal.

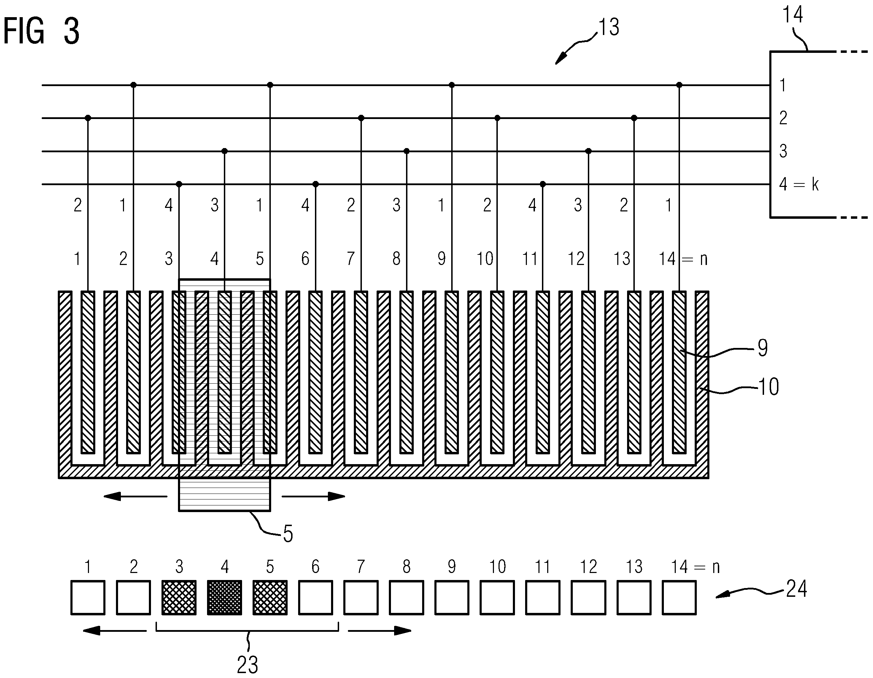

Wie weiter unten anhand von Fig. 3 erläutert wird, verbindet die n x k Verbindungsmatrix 13 jede der n Elektroden 9 mit jeweils einem der k Kanäle des 1-aus-k Multiplexers 14.

Der 1-aus-k Multiplexer 14 schaltet in Abhängigkeit von einem Steuersignal 17 einen der k Kanäle an den zweiten Messanschluss 15 des Kapazität-Digital-Wandlers 12 durch, während er gleichzeitig die übrigen k-1 Kanäle mit Masse verbindet, so dass diese für die Kapazitätsmessung neutralisiert werden und zusätzlich als Abschirmung wirken. Ein typisches Beispiel eines solchen 1-aus-k Multiplexers 14 ist der integrierte Schaltkreis 74xx238 aus der 74xx Logikfamilie. Dieser 3:8 Multiplexer/Decoder weist 8 Kanäle auf, von denen jeder in Abhängigkeit von 3 steuerseitigen Eingangsbits des in diesem Fall 3-Bit-Steuersignals 17 ausgewählt werden kann.

Das Steuersignal 17 wird von einer Auswerteeinrichtung 18 erzeugt, um periodisch nacheinander jeden der Kanäle 1 bis k an den zweiten Messanschluss 15 des Kapazität-Digital-Wandlers 12 durchzuschalten und anhand der nacheinander gemessenen 24 Bit Kapazitätswerte 16 die jeweils aktuelle Stellung des Zeigers 5 zu ermitteln und als Messwert 19 auszugeben.

Zurück zu Fig. 1 ist der Pick-up-Sensor 2 ist über eine Leitung 20 mit einer Elektronik 21 verbunden, die z. B. die Auswerteeinrichtung 18 oder Teile davon beinhaltet und über eine Batterie oder Solarzelle für die Stromversorgung und eine Funkschnittstelle 22 wie z. B. Bluetooth Low Energy (BLE) zur Übertragung der ermittelten Zeigerstellung an eine übergeordnete Stelle verfügt. Der Kapazität-Digital-Wandler 12, die n x k Verbindungsmatrix 13 und der 1-aus-k Multiplexer 14 können in dem Pick-up-Sensor 2 integriert sein. Alternativ zu dem Beispiel nach Fig. 1 kann auch die Elektronik 21 in dem Pick-up-Sensor 2 integriert sein.

Fig. 3 dient dazu, die n x k Verbindungsmatrix 13 anhand eines einfachen Beispiels zu erläutern. Die Anzahl k, hier z. B. k = 4, bezeichnet die Breite eines Messfensters 23 von k nebeneinanderliegenden Elektroden 9, um die Position des Zeigers 5 zu erfassen. Bei dem gezeigten Beispiel wird angenommen, dass der Zeiger 5 drei (b = 3) nebeneinander liegende Elektroden 9 kapazitiv beeinflusst, also die Kapazitäten zwischen diesen Elektroden 9 und den zwischen ihnen liegenden Gegenelektroden 10. Dazu muss der Zeiger nicht aus Metall sein; es reicht, dass seine Dielektrizitätskonstante unterschiedlich zu der von Luft ist. Bei dem Beispiel wird weiterhin angenommen, dass der Zeiger 5 die b Elektroden 9 rechts und links von ihm jeweils gleich, aber in zunehmender Entfernung von ihm unterschiedlich beeinflusst. In der Zeile 24 sind die kapazitiven Beeinflussungen der Elektroden 9 durch den Zeiger 5 in seiner aktuellen Position durch unterschiedliche Graustufen verdeutlicht. Bei der gezeigten Zeigerposition wird von den n Elektroden 9 die Elektrode mit der laufenden Nummer 4 am stärksten beeinflusst, die Elektroden rechts und links davon mit den Nummern 3 und 5 werden schwächer und alle übrigen Elektroden nicht beeinflusst. Die in dem Messfenster 23 gemessenen k Kapazitätswerte, werden über die n x k Verbindungsmatrix 13 den k Kanälen des 1-aus-k Multiplexers 14 zur Verfügung gestellt.

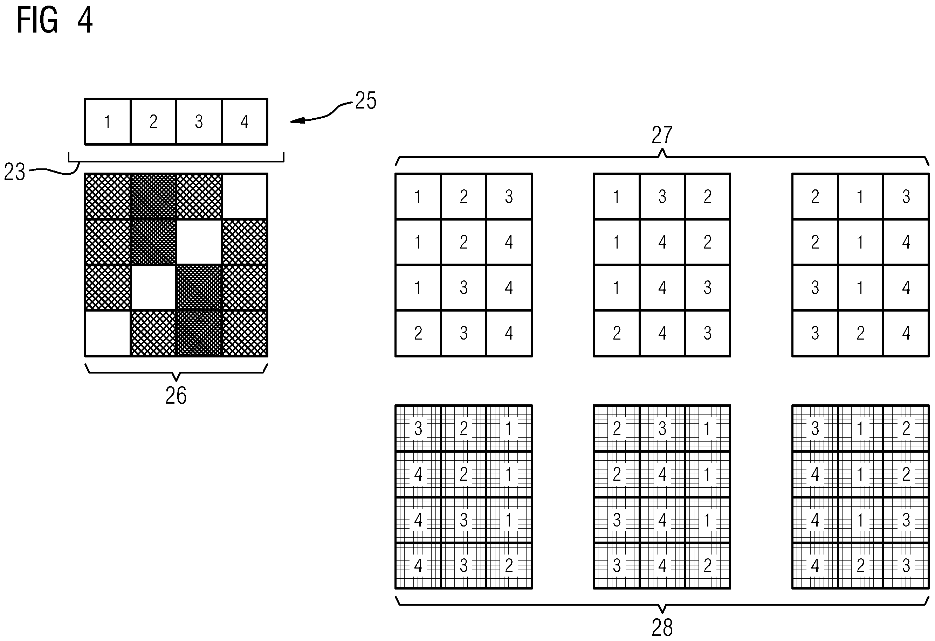

Fig. 4 verdeutlicht in der oberen Zeile 25 die sich in dem Messfenster 23 an der aktuellen Position des Zeigers 5 befindenden vier Elektroden. Die Nummern 1, 2, 3, 4 = k bezeichnen dabei die Positionen der Elektroden innerhalb des Messfensters 23.

Der Block 26 zeigt alle vier (4 = k!/[(k-b)!·b!]) möglichen Kombinationen ohne Wiederholung der b = 3 von dem Zeiger 5 beeinflussten Elektroden aus den k = 4 Elektrodenpositionen in dem Messfenster 23.

Die sechs Blöcke 27 und 28 zeigen zusammen alle vierundzwanzig (24 = k!/(k-b)!) möglichen Variationen der b = 3 von dem Zeiger 5 beeinflussten Elektroden aus den k = 4 Elektrodenpositionen in dem Messfenster 23. Da, wie oben erwähnt, die b Elektroden in zunehmender Entfernung von dem Zeiger 5 unterschiedlich aber rechts und links von ihm jeweils gleich kapazitiv beeinflusst werden, kommt es zu Wiederholungen, wobei die Variationen der grau unterlegten Blöcke 28 Wiederholungen der Variationen in den Blöcken 27 darstellen. So ist z. B. das Beeinflussungsmuster der Elektroden an den Positionen 1, 2, 3 identisch mit dem Beeinflussungsmuster der Elektroden an den Positionen 3, 2, 1.

Es gibt daher zwölf (12 = k!/[2-(k-b)!] = N) Variationen ohne Wiederholung der b = 3 von dem Zeiger 5 beeinflussten Elektroden aus den k = 4 Elektrodenpositionen in dem Messfenster 23. Es ist daher möglich, das Messfenster N-mal jeweils um den Betrag einer Elektrodenposition versetzt nebeneinander zu legen, wobei in den unterschiedlichen Messfenstern 23 unterschiedliche Variationen der von dem Zeiger 5 beeinflussten Elektroden erfasst werden. Damit ergibt sich für das gezeigte Beispiel die Möglichkeit, jede beliebige Zeigerposition mit Hilfe von n = N-1+b, hier also vierzehn nebeneinander liegenden Elektroden eindeutig zu erfassen und ohne Informationsverlust auf die k = 4 Kanäle des 1-aus-k Multiplexer 14 auszugeben.

Bei dem Beispiel in Fig. 3 sind die aus den Blöcken 27, 28 der Fig. 4 entnehmbaren Variationen wie folgt aneinander ge- reiht:

```
2 1 4

  1 4 3
    4 3 1
      usw. ,
```

wobei aus den oben angegebenen Gründen Variationen mit demselben Beeinflussungsmuster nur einmal verwendet werden dürfen. So kann bei dem Beispiel oben nach der Verwendung der Variation "4 3 1" die Variation "1 3 4" nicht mehr verwendet werden.

Im Ergebnis erhält man also die in Fig. 3 gezeigte Anordnung von vierzehn (n = 14) nebeneinander liegenden Elektroden 9, die durch die n x k Verbindungsmatrix 13 in der folgenden Reihenfolge mit den vier (k = 4) Kanälen des 1-aus-k Multiplexers 14 verbunden sind:
2 1 4 3 1 4 2 3 1 2 4 3 2 1 .

Aus dem beschriebenen einfachen Beispiel kann man folgende Bedingungen ableiten, um bei der erfindungsgemäßen kapazitiven Ablesevorrichtung 1 mit einer möglichst großen Anzahl von Elektroden 9 eine hohe Messauflösung zu erreichen:
Die Breite des Messfensters 23, d. h. die Anzahl k der von dem Messfenster 23 umfassten Elektroden 9, ist durch den jeweils verwendeten 1-aus-k Multiplexer 14 vorgegeben.

Die Breite der Elektroden 9 in Umfangsrichtung des Kreisbogens ist optimal, wenn sie möglichst viele Variationen ohne Wiederholung der b von dem Zeiger 5 beeinflussten Elektroden aus den k Elektrodenpositionen in dem Messfenster 23 zulässt. Das ist dann gegeben, wenn der Zeiger 5 möglichst viele der Elektroden 9 innerhalb des Messfenster 23 unterschiedlich beeinflusst. Die Anzahl der möglichen Variationen wird umso stärker verringert, je mehr Elektroden der Zeiger entweder gleich oder überhaupt nicht, in beiden Fällen also nicht unterscheidbar, beeinflusst.

Da über die n x k Verbindungsmatrix 13 an jedem Kanal des 1-aus-k Multiplexers 14 mehrere bis viele Elektroden gleichzeitig angeschlossen sind, kann es zu Messinterferenzen kommen, wenn die Anzahl b der von dem Zeiger 5 gleichzeitig und dabei messbar beeinflussten Elektroden größer als die Breite k des Messfensters ist.

In den beiden vorgenannten Fällen kann bei der oben anhand von Fig. 4 erläuterten Aneinanderreihung der Variationen als Bedingung eine Abstandsregel eingeführt werden, wonach zwischen allen Elektroden, die mit ein und demselben Kanal des 1-aus-k Multiplexers 14 verbunden sind, jeweils ein Mindestabstand e < k vorliegen muss, innerhalb dessen e-1 weitere Elektroden liegen, die mit anderen Kanälen verbunden sind.

### Beispiele:

Mit b = 3 und k = 4 erhält man 30 Variationen für die Erstellung des Verbindungsmusters der n x k Verbindungsmatrix 13. Mit e = 4 wird die Anzahl der Variationen auf 23 reduziert und man erhält folgendes Verbindungsmuster (n = 23-1+b = 25):
2 1 3 4 2 1 5 3 2 4 1 3 5 4 1 2 3 4 5 2 3 1 5 2 4 .

Mit b = 3, k = 8 und e = 7 können von den ursprünglich 168 möglichen Variationen 117 aneinandergereiht werden und man erhält folgendes Verbindungsmuster (n = 117-1+b = 119):
2 1 3 4 5 6 7 2 1 8 3 4 6 5 2 1 7 3 4 8 5 2 6 1 3 7 4 5 2 8 1 3 6 4 5 7 2 8 3 1 4 6 7 5 2 3 8 4 6 1 5 2 7 3 8 6 1 4 2 5 3 7 6 1 8 4 5 3 2 6 7 1 4 5 8 2 3 6 7 4 1 5 8 3 6 2 4 7 1 8 5 6 3 4 2 7 1 5 6 8 4 2 3 1 5 7 8 6 4 2 1 5 3 8 7 4 6 2 1 .

Die Aneinanderreihung der Variationen zur Erstellung des Verbindungsmusters der Elektroden 9 mit den Kanälen des 1-aus-k Multiplexers 14 kann durch einfache automatische numerische Berechnung erfolgen.

## Patentansprüche

1. Kapazitive Ablesevorrichtung (1) für ein Zeigerinstrument (4), mit einem zur Anordnung gegenüber einem drehenden Zeiger (5) des Zeigerinstruments (4) vorgesehenen Träger (2, 8), auf dem in einem Kreisbogen eine Vielzahl von n radialen Elektroden (9) im Wechsel mit radialen Gegenelektroden (10) angeordnet sind,
wobei die Gegenelektroden (10) elektrisch miteinander verbunden und an einem ersten Messanschluss (11) eines Kapazität-Digital-Wandlers (12) angeschlossen sind,
wobei die n Elektroden (9) über eine n x k Verbindungsmatrix (13) und einen nachgeordneten 1-aus-k Multiplexer (14) an einem zweiten Messanschluss (15) des Kapazität-Digital-Wandlers (12) angeschlossen sind, und
wobei die n x k Verbindungsmatrix (13) jede der n Elektroden (9) mit jeweils einem der k Kanäle des 1-aus-k Multiplexers (14) verbindet, wobei das Verbindungsmuster entlang des Kreisbogens zu einem Ermitteln einer Position des Zeigers (5) variiert.

2. Kapazitive Ablesevorrichtung (1) nach Anspruch 1,
**dadurch gekennzeichnet, dass** das Verbindungsmuster entlang des Kreisbogens mit n Variationen von b aus k variiert und n > k ≥ b > 1 ist.

3. Kapazitive Ablesevorrichtung (1) nach Anspruch 2,
**dadurch gekennzeichnet, dass** die n Variationen von b aus k unter Berücksichtigung einer Reihenfolge der Kanäle gebildet sind.

4. Kapazitive Ablesevorrichtung (1) nach einem der Ansprüche 1 bis 3, **dadurch gekennzeichnet, dass** die kapazitive Ablesevorrichtung (1) zu einem Ermitteln einer Stärke einer kapazitiven Beeinflussung zumindest eines Kanals ausgebildet ist.

5. Kapazitive Ablesevorrichtung (1) nach einem der Ansprüche 1 bis 4, **dadurch gekennzeichnet, dass** die Elektroden (9) in einem geschlossenen Kreis angeordnet sind.

6. Kapazitive Ablesevorrichtung (1) nach einem der Ansprüche 1 bis 5, **dadurch gekennzeichnet, dass** der 1-aus-k Multiplexer (14) dazu ausgebildet und gesteuert ist, nacheinander einen der k Kanäle auszuwählen und dabei die übrigen k-1 Kanäle mit Masse zu verbinden.

## Claims

1. Capacitive reading apparatus (1) for a pointing instrument (4), with a carrier (2, 8) provided for arrangement in relation to a rotating pointer (5) of the pointer instrument (4), on which carrier a large number of n radial electrodes (9) are arranged in a circular arc in alternation with radial counter electrodes (10),
wherein the counter electrodes (10) are electrically connected with one another and are connected to a first measurement terminal (11) of a capacitance-to-digital converter (12),
wherein the n electrodes (9) are connected via an n x k connection matrix (13) and a downstream 1-out-of-k multiplexer (14) to a second measurement terminal (15) of the capacitance digital converter (12), and
wherein the n x k connection matrix (13) connects each of the n electrodes (9) with one of the k channels of the 1-out-of-k multiplexer (14) in each case, wherein the connecting pattern varies along the circular arc to form an ascertainment of a position of the pointer (5).

2. Capacitive reading apparatus (1) according to claim 1, **characterised in that** the connecting pattern varies along the circular arc with n variations of b out of k and n > k ≥ b > 1.

3. Capacitive reading apparatus (1) according to claim 2, **characterised in that** the n variations of b out of k are formed taking a sequence of the channels into account.

4. Capacitive reading apparatus (1) according to one of claims 1 to 3, **characterised in that** the capacitive reading apparatus (1) is designed to ascertain a strength of a capacitive influencing of at least one channel.

5. Capacitive reading apparatus (1) according to one of claims 1 to 4, **characterised in that** the electrodes (9) are arranged in a closed circle.

6. Capacitive reading apparatus (1) according to one of claims 1 to 5, **characterised in that** the 1-out-of-k multiplexer (14) is designed and controlled to successively select one of the k channels and connect the remaining k-1 channels to earth.

## Revendications

1. Dispositif (1) capacitif de lecture pour un instrument (4) à aiguille, comprenant un support (2, 8), qui est prévu pour être monté en face d'une aiguille (5) tournante de l'instrument (4) à aiguille et sur lequel sont disposées, en un arc de cercle, une pluralité de n électrodes (9) radiales, en alternance avec des électrodes (10) antagonistes radiales,
dans lequel les électrodes (10) antagonistes sont connectées entre elles électriquement et sont raccordées à une première borne (11) de mesure d'un convertisseur (12) capacité-numérique,
dans lequel les n électrodes (9) sont raccordées par une matrice (13) de connexion n x k et par un multiplexeur (14) 1 entre k en aval à une deuxième borne (15) de mesure du convertisseur (12) capacité-numérique, et
dans lequel la matrice (13) de connexion n x k connecte chacune des n électrodes (9) à respectivement l'un des k canaux du multiplexeur (14) 1 entre k, dans lequel le modèle de connexion varie le long de l'arc de cercle en fonction d'une détermination d'une position de l'aiguille (5).

2. Dispositif (1) capacitif de lecture suivant la revendication 1,
**caractérisé en ce que** le modèle de connexion le long de l'arc de cercle varie avec n variations de b entre k et n > k ≥ b > 1.

3. Dispositif (1) capacitif de lecture suivant la revendication 2,
**caractérisé en ce que** les n variations de b entre k sont formées en tenant compte d'une succession des canaux.

4. Dispositif (1) capacitif de lecture suivant l'une des revendications 1 à 3, **caractérisé en ce que** le dispositif (1) capacitif de lecture est constitué pour la détermination d'une intensité d'une influence capacitive d'au moins un canal.

5. Dispositif (1) capacitif de lecture suivant l'une des revendications 1 à 4, **caractérisé en ce que** les électrodes (9) sont disposées suivant un cercle fermé.

6. Dispositif (1) capacitif de lecture suivant l'une des revendications 1 à 5, **caractérisé en ce que** le multiplexeur (14) 1 entre k est constitué et commandé pour sélectionner l'un après l'autre l'un des k canaux et pour mettre ainsi les autres k-1 canaux à la terre.
